# EUROPÄISCHE PATENTSCHRIFT

(11) **EP 1 045 324 B1**
(45) Veröffentlichungstag und Bekanntmachung des Hinweises auf die Patenterteilung: **22.12.2004**
(21) Anmeldenummer: 00810306.1
(22) Anmeldetag: 07.04.2000
(51) Int. Cl.: G06F 17/60

(54) **Verfahren und Plattform für Loyalitätspunkteprogramme**
Method and platform for loyalty points programs
Procédé et plateforme pour des programmes de points de fidélité

(30) Priorität: 14.04.1999 CH 68899
(43) Veröffentlichungstag der Anmeldung: 18.10.2000
(73) Patentinhaber: Swisscom Mobile AG, 3050 Bern (CH)
(72) Erfinder: Ritter, Rudolf, 3052 Zollikofen (CH); Cabano, Claudio, 3006 Bern (CH); Lauper, Eric, 3014 Bern (CH)
(74) Vertreter: BOVARD AG - Patentanwälte

(56) Entgegenhaltungen:
- EP-A- 0 173 835
- EP-A- 0 905 661
- WO-A-98/37477
- FR-A- 2 754 082

## Beschreibung

Die vorliegende Erfindung betrifft ein Verfahren und eine Plattform für Loyalitätspunkteprogramme, insbesondere betrifft die vorliegende Erfindung ein Verfahren und eine geeignete Plattform zum Zuweisen und Einlösen von Loyalitätspunkten und zum Erstellen von dafür geeigneten Loyalitätspunkteprogrammen, wobei Loyalitätspunkte Kunden gutgeschrieben werden, die an einem genannten Loyalitätspunkteprogramm teilnehmen, wenn sie Produkte und Dienstleistungen von Dienstanbietern beziehen, die an diesem Loyalitätspunkteprogramm teilnehmen, und wobei Loyalitätspunkte von teilnehmenden Kunden als Zahlungsmittel beim Bezug von mindestens gewissen Produkten und Dienstleistungen von teilnehmenden Dienstanbietem eingesetzt werden können.

Loyalitätspunkteprogramme wie sie oben beschrieben wurden, sind bekannt und werden von zahlreichen und verschiedensten Firmen, beispielsweise von Verkaufshäusern, interessierten Kunden angeboten. Üblicherweise werden in den bekannten Loyalitätspunkteprogrammen von betreffenden Anbietern persönliche Kundenkarten an interessierte Kunden ausgestellt, die in der Regel einen Aufdruck mit Kundendaten aufweisen, zum Beispiel den Namen und die firmenspezifische Kundennummer, und oft auch einen Magnetstreifen umfassen, der die selben oder ähnliche Informationen enthält und der es ermöglicht, die Identität des Kunden und die Authentizität der Kundenkarte mittels einem Magnetstreifenleser zu erfassen und zur Weiterverarbeitung an einen Computer zu übermitteln. Obwohl solche Loyalitätspunkteprogramme auf reges Interesse stossen, verzichten viele Kunden auf eine Teilnahme, da sie sonst eine Unmenge solcher Kundenkarten mit sich tragen müssen. Auf der anderen Seite gibt es zudem auch viele kleinere und mittlere Unternehmen, die ihren Kunden zwar gerne ein Loyalitätspunkteprogramm anbieten möchten, denen aber der Aufwand zur Realisierung eines solchen Loyalitätspunkteprogramms zu gross und zu kostspielig ist.

In der Patentanmeldung DE 197 18 115 werden eine Chipkarte, und ein Verfahren zur Verwendung dieser Chipkarte, für die Durchführung von Transaktionen, bei denen Wertdaten zwischen dem Karteninhaber und mindestens einem Transaktionspartner (Service Provider) übertragen werden, beschrieben. Auf der Chipkarte können eine oder mehrere Kundenapplikationen für die Durchführung von Transaktionen mit einem oder mehreren Service-Providern geladen werden. Als ein Beispiel für die Verwendung der Chipkarte wird ein Bonussystem beschrieben. Das Verfahren zur Verwendung der Chipkarte beschreibt ein System bestehend aus einem System Operator Teil, einem oder mehreren dem System Operator zugeordneten Service Terminals, einem oder mehreren Service Providern, einem oder mehreren einem Service Provider zugeordneten Kunden Terminals und mindestens einer Kunden-Chipkarte. Kundenapplikationen werden an vom System Operator kontrollierten Service Terminals geladen. Die Kundenapplikationen werden an, den Service-Providern zugeordneten, Kunden Terminals für die Durchführung von Transàktionen mit dem Service Provider verwendet. Ein Kunde kann somit mit einer einzigen Chipkarte Transaktionen mit verschiedenen Service Providern durchführen. Ein wesentlicher Nachteil ist jedoch, dass ein Service Provider, gemäss minimalen Standards des System Operators, Kundenapplikationen selber entwickeln und die für die Durchführung von Transaktionen notwendige Infrastruktur selber zur Verfügung stellen muss. Ein weiterer Nachteil ist, dass der Kunde Kundenapplikationen nur an Service Terminals laden kann und somit für jede Modifikation an Kundenapplikationen ein geeignetes Service Terminal aufsuchen muss.

Es ist eine Aufgabe der vorliegenden Erfindung, ein neues Verfahren und eine geeignete Plattform zum Zuweisen und Einlösen von Loyalitätspunkten und zum Erstellen von dafür geeigneten Loyalitätspunkteprogrammen vorzuschlagen, welches insbesondere die oben beschriebenen Nachteile nicht aufweist.

Gemäss der vorliegenden Erfindung wird dieses Ziel insbesondere durch die Merkmale der unabhängigen Ansprüche erreicht. Weitere vorteilhafte Ausführungsformen gehen ausserdem aus den abhängigen Ansprüchen und der Beschreibung hervor.

Insbesondere wird dieses Ziel durch die Erfindung dadurch erreicht, dass Loyalitätspunkteprogramme erstellt werden, indem vorgefertigte Softwaremodule für eine Loyalitätszentrale und für Loyalitätskundenprogramme von einer Loyalitätsplattform bezogen und konfiguriert werden und indem neu erstellte Loyalitätspunkteprogramme mittels einer bereitstehenden Benutzeroberfläche bei einer Loyalitätsplattform registriert werden, wobei an einem betreffenden registrierten Loyalitätspunkteprogramm teilnehmende Kunden und Dienstanbieter registriert werden, indem Kundeninformationen, respektive Dienstanbieterinformationen, durch entsprechende Programmfunktionen einer Loyalitätszentrale erfasst und in einer Kundendatenbank, respektive in einer Dienstanbieterdatenbank dieser Loyalitätszentrale abgespeichert werden, wobei für jeden registrierten Kunden und für jeden registrierten Dienstanbieter mindestens ein Loyalitätspunktekonto erstellt wird und wobei die Kundeninformationen, respektive die Dienstanbieterinformationen, mindestens eine Kundenidentifizierung, respektive eine Dienstanbieteridentifizierung umfassen, dass Loyalitätspunkte einem Loyalitätspunktekonto eines registrierten Kunden gutgeschrieben werden, der sich beim Bezug von Produkten und/oder Dienstleistungen von einem mit dem betreffenden Loyalitätspunkteprogramm registrierten Dienstanbieter mit seiner Kundenidentifizierung identifiziert, und dass der Transfer von Loyalitätspunkten vom Loyalitätspunktekonto des betreffenden Kunden als Zahlungsmittel auf ein Loyalitätspunktekonto eines mit dem betreffenden Loyalitätspunkteprogramm registrierten Dienstanbieters durch eine vom betreffenden Kunden gewählte Programmfunktion des Loyalitätskundenprogramms ausgelöst wird, wobei mindestens die Anzahl zu transferierender Loyalitätspunkte, die Kundenidentifizierung des betreffenden Kunden sowie die Dienstanbieteridentifizierung des zu bezahlenden Dienstanbieters an eine Loyalitätszentrale des betreffenden Loyalitätspunkteprogramms übermittelt werden.

Vorzugsweise werden die genannte Kundenidentifizierung und ein genanntes Loyalitätskundenprogramm für das betreffende Loyalitätspunkteprogramm im Speicher eines auf diesen Kunden ausgestellten Identifizierungsmoduls abgespeichert, welches Identifizierungsmodul mindestens einen mit dem genannten Speicher verbundenen Prozessor umfasst und zum Beispiel eine SIM-Karte (Subscriber Identity Module) für Mobilfunkgeräte repräsentiert. Dies hat den Vorteil, dass ein Kunde sich mit dem Identifizierungsmodul nicht bloss identifizieren kann, beispielsweise für den Bezug von Loyalitätspunkten, sondern dass er auch Programmfunktionen von Loyalitätskundenprogrammen ausführen kann und somit Loyalitätspunkte von seinem Loyalitätspunktekonto als Zahlungsmittel auf Loyalitätspunktekonti von Dienstanbietern transferieren kann, die an einem Loyalitätspunkteprogramm teilnehmen.

In einer Ausführungsvariante werden mindestens gewisse Loyalitätspunktekonti von Kunden auf deren Identifizierungsmodul eingerichtet werden, wobei der Zugang zu, respektive die Verwaltung von solchen Loyalitätspunktekonti durch entsprechende Programmfunktionen des zugehörigen genannten Loyalitätskundenprogramms kontrolliert, respektive gehandhabt wird. Die Möglichkeit, Loyalitätspunkte auf dem Identifizierungsmodul zu speichern hat den Vorteil, dass die Einsatzmöglichkeiten des Identifizierungsmoduls erweitert werden, indem das Identifizierungsmodul beispielsweise wie eine Bargeldkarte (Electronic Purse) eingesetzt werden kann.

In einer Ausführungsvariante werden mindestens gewisse Loyalitätspunktekonti von Kunden in einer Loyalitätszentrale eingerichtet, wobei der Zugang zu, respektive die Verwaltung von solchen Loyalitätspunktekonti durch entsprechende Programmfunktionen dieser Loyalitätszentrale kontrolliert, respektive gehandhabt wird.

Vorzugsweise wird der Transfer von Loyalitätspunkten vom Loyalitätspunktekonto eines betreffenden Kunden auf ein Loyalitätspunktekonto eines anderen registrierten Kunden durch eine vom betreffenden Kunden gewählte Programmfunktion des Loyalitätskundenprogramms ausgelöst, wobei mindestens die Anzahl zu transferierenden Loyalitätspunkte, die Kundenidentifizierung des betreffenden Kunden sowie die Kundenidentifizierung des anderen Kunden an die Loyalitätszentrale und/oder an das Loyalitätskundenprogramm des anderen Kunden übermittelt werden. Dies hat den Vorteil, dass ein teilnehmender Kunde nicht bloss Loyalitätspunkte als Bezahlung an Dienstanbieter transferiert werden können, sondern, dass Loyalitätspunkte auf Initiative von teilnehmenden Kunden auch zwischen teilnehmenden Kunden transferiert werden können.

Vorzugsweise werden Loyalitätspunkte dem Loyalitätspunktekonto eines registrierten Kunden durch einen Dienstanbieter-POS gutgeschrieben, indem vom Dienstanbieter-POS mindestens eine Kundenidentifizierung, eine Dienstanbieteridentifizierung sowie Angaben zur Ermittlung der Anzahl gutzuschreibender Loyalitätspunkte an die Loyalitätszentrale und/oder an das Loyalitätskundenprogramm dieses registrierten Kunden übertragen werden.

Vorzugsweise erfolgen Datenübertragungen zwischen einem Loyalitätskundenprogramm auf einem Identifizierungsmodul und einer Loyalitätszentrale mittels einem Kommunikationsendgerät, mit welchem das Identifizierungsmodul verbunden ist, über ein Telekommunikationsnetz. Je nach Ausführungsvariante ist das Kommunikationsendgerät beispielsweise ein festinstalliertes Terminal an einem öffentlich zugänglichen Ort, welches über ein Festnetz mit der Loyalitätszentrale kommuniziert, oder ein Mobilfunkgerät, welches über ein Mobilnetz, beispielsweise ein GSM- oder ein UMTS-Netz, mit der Loyalitätszentrale kommuniziert.

Vorzugsweise erfolgen Datenübertragungen zwischen einem Dienstanbieter-POS und einem Loyalitätskundenprogramm über eine kontaktlose Schnittstelle, beispielsweise eine Infrarotschnittstelle, zum Beispiel eine High Speed Infrared (HSIR)-Schnittstelle oder eine IrDA-Schnittstelle (Infrared Data Association), eine induktive Schnittstelle, zum Beispiel eine Radio Frequency Identification (RFID)-Schnittstelle, eine Home RF (Radio Frequency)-Schnittstelle, eine Digital European Cordless Telecommunications (DECT)-Schnittstelle oder eine andere Cordless Telecommunications System (CTS)-Schnittstelle, oder eine hochfrequente Funkschnittstelle, zum Beispiel eine sogenannte "Bluetooth-Schnittstelle". Je nach Ausführungsvariante ist die kontaktlose Schnittstelle für das Loyalitätskundenprogramm im Identifizierungsmodul integriert, beispielsweise in Form einer elektromagnetischen Spule, oder sie ist im Kommunikationsendgerät integriert, mit welchem das Identifizierungsmodul verbunden ist.

Je nach Ausführungsvariante erfolgen Datenübertragungen zwischen einem Loyalitätskundenprogramm auf dem Identifizierungsmodul eines ersten Kunden und einem Loyalitätskundenprogramm auf dem Identifizierungsmodul eines zweiten Kunden über eine kontaktlose Schnittstelle, wie oben beschrieben im Identifizierungsmodul oder in einem verbundenen Kommunikationsendgerät integriert, oder über ein Telekommunikationsnetz mittels Kommunikationsendgeräten, mit welchem die Identifizierungsmodule verbunden sind.

Vorzugsweise kann ein registrierter Kunde mittels Programmfunktionen des Loyalitätskundenprogramms Einträge in der Kundendatenbank, respektive in der Dienstanbieterdatenbank durchblättern und selektieren, wobei entsprechende Abfragedaten und resultierende Eintragsdaten zwischen dem mit einem Kommunikationsendgerät verbundenen Identifizierungsmodul und den genannten Datenbanken über ein Telekommunikationsnetz ausgetauscht werden, beispielsweise wie oben beschrieben über ein Mobilnetz oder ein Festnetz. Dabei wird bei der Selektion eines Dienstanbietereintrags, respektive eines Kundeneintrags, mindestens die dem selektierten Eintrag zugehörige Dienstanbieteridentifizierung, respektive Kundenidentifizierung, von der Loyalitätszentrale an das Loyalitätskundenprogramm übermittelt.

Vorzugsweise umfasst die Dienstanbieterdatenbank auch Produkteinträge und Dienstleistungseinträge und bei der Selektion eines Produkteintrags, respektive eines Dienstleistungseintrags, werden mindestens eine dem selektierten Eintrag zugehörige Produktidentifizierung, respektive Dienstleistungsidentifizierung, sowie entsprechende in Loyalitätspunkten angegebene Kostenangaben von der genannten Loyalitätszentrale an das Loyalitätskundenprogramm übermittelt.

In einer Ausführungsvariante umfasst eine Loyalitätszentrale eine Kurzmeldungsdienstzentrale und der Datenaustausch zwischen der Loyalitätszentrale und einem Loyalitätskundenprogramm erfolgt mittels speziellen Kurzmeldungen.

In einer Ausführungsvariante umfassen die oben genannten Abfragedaten Angaben über die aktuelle geografische Position des Kommunikationsendgeräts, welche beispielsweise vom Benutzer eingegeben oder automatisch mittels einem Positionierungssystem, zum Beispiel ein satellitenbasiertes GPS-System (Global Positioning System) oder ein TPS-System (Terrestrial Positioning System) bestimmt werden, und die oben genannten resultierenden Eintragsdaten sind spezifisch auf das durch die geografische Position bestimmte geografische Gebiet eingeschränkt.

Vorzugsweise kann bei der Konfigurierung von den oben genannten vorgefertigten Softwaremodulen definiert werden mit welchen anderen registrierten (Partner-) Loyalitätspunkteprogrammen Loyalitätspunkte ausgetauscht werden können.

Vorzugsweise kann bei der Konfigurierung von den oben genannten vorgefertigten Softwaremodulen definiert werden wo, respektive wie, auf die zugehörige Loyalitätszentrale zugegriffen werden kann.

In einer Ausführungsvariante können bei der Konfigurierung von den oben genannten vorgefertigten Softwaremodulen mindestens gewisse Programmfunktionen dieser Softwaremodule deaktiviert werden.

In einer Ausführungsvariante wird bei der Registrierung eines Loyalitätspunkteprogramms diesem Loyalitätspunkteprogramm eine Loyalitätspunkteprogrammidentifizierung zugewiesen und bei der Registrierung eines Kunden, respektive eines Dienstanbieters, mit diesem Loyalitätspunkteprogramm wird diese Loyalitätspunkteprogrammidentifizierung in der Kundendatenbank, respektive in der Dienstanbieterdatenbank, mit den entsprechenden Kundeninformationen, respektive Dienstanbieterinformationen, verknüpft. Auf diese Weise können beispielsweise verschiedene Loyalitätspunkteprogramme durch eine gemeinsame Loyalitätszentrale unterstützt werden und es kann trotzdem zwischen Kunden unterschieden werden, die nur für bestimmte Loyalitätspunkteprogramme registriert sind.

Die Loyalitätsplattform für Loyalitätspunkteprogramme, welche einen Kommunikationsserver mit Verbindungen zu mindestens einem Telekommunikationsnetz umfasst, umfasst vorzugsweise vorgefertigte Softwaremodule für eine Loyalitätszentrale und für Loyalitätskundenprogramme, welche von interessierten Loyalitätspunkteprogrammanbietern bezogen und konfiguriert werden können, wobei das Softwaremodule für eine Loyalitätszentrale so konfiguriert werden kann, dass es als unabhängige Loyalitätszentrale auf einem Kommunikationsserver oder als Applikationseinheit einer Loyalitätszentrale der Loyalitätsplattform installiert werden kann, zudem umfasst die Loyalitätsplattform vorzugsweise eine Benutzeroberfläche, mittels welcher neue Loyalitätspunkteprogramme registriert werden können, und eine Loyalitätszentrale umfasst vorzugsweise ein Registrationsmodul, mittels welchem Kunden, respektive Dienstanbieter, beim betreffenden registrierten Loyalitätspunkteprogramm registriert werden können.

Nachfolgend wird eine Ausführung der vorliegenden Erfindung anhand eines Beispieles beschrieben. Das Beispiel der Ausführung wird durch die einzige beigelegte Figur illustriert, die ein Blockdiagramm enthält, welches schematisch eine Loyalitätsplattform illustriert, welche eine Loyalitätszentrale umfasst, die über verschiedene Telekommunikationsnetze mit Loyalitätskundenprogrammen auf Identifizierungsmodulen und mit Dienstanbieter-POS (Point of Service) kommunizieren kann.

Die Referenznummer 1 bezieht sich auf eine schematisch dargestellte Loyalitätsplattform, welche über verschiedene Datenbanken 16, 21, 22, vorgefertigte und konfigurierbare Softwaremodule 11, 12, 13, Softwareprogramme 14, 15, 17 mit Benutzerschnittstellen zur Loyalitätsplattform, sowie eine Loyalitätszentrale 2 umfasst. Einzelne Komponenten und Module der Loyalitätsplattform 1 können auf einem oder mehreren miteinander verbundenen herkömmlichen Kommunikationsservern implementiert werden, das heisst Servercomputer mit den nötigen Hardware- und Softwaremodulen zur Verbindung mit verschiedenen Telekommunikationsnetzen 3, 4, 5. Die verschiedenen Softwareprogramme und -module können in unterschiedlichen Programmiersprachen ausgeführt werden.

Das Bezugszeichen 3 bezieht sich auf ein Telekommunikationsnetz, typischerweise aber nicht notwendigerweise ein Festnetz, zum Beispiel das öffentliche geschaltete Telefonnetz, ein LAN oder WAN (Local oder Wide Area Network), oder das Internet, über welches interessierte Kunden und Dienstanbieter mit einem Kommunikationsendgerät 31, beispielsweise ein kommunikationsfähiger Personal Computer, auf die Benutzerschnittstellen 14, 15, 17 zur Loyalitätsplattform 1 zugreifen können. Die Benutzerschnittstelle 14 ist ein Softwarekonfigurationsmodul, das heisst ein programmiertes Softwaremodul welches interessierten Loyalitätspunkteprogrammanbietern ermöglicht, vorgefertigte Softwaremodule 11, 12, 13 zu konfigurieren. Das Softwarekonfigurationsmodul 14 präsentiert sich dem Benutzer beispielsweise als grafische Benutzeroberfläche, mittels welcher vordefinierte Optionen gewählt, Parameter gesetzt, Funktionen aktiviert, respektive deaktiviert und vordefinierte oder neue Regeln betreffend die vorgefertigten Softwaremodule 11, 12, 13 eingegeben und beispielsweise als Loyalitätspunkteprogrammprofil in einer Loyalitätspunkteprogrammdatenbank 16 abgespeichert werden können. Als Beispiel für konfigurierbare Regeln soll hier erwähnt werden, dass definiert werden kann, ob und mit welchen anderen Loyalitätspunkteprogrammen Loyalitätspunkte ausgetauscht werden können, in welchem Gegenwert für bezahlte Produkte oder Dienstleistungen Loyalitätspunkte gutgeschrieben werden, respektive für eingelöste Loyalitätspunkte Geldwerte anerkannt werden. Die Benutzerschnittstelle 15 ist ein programmiertes Softwaremodul, welches interessierten Loyalitätspunkteprogrammanbietern eine Benutzeroberfläche zur Verfügung stellt, um die im Loyalitätspunkteprogrammprofil konfigurierten Softwaremodule 11, 12, 13 als Loyalitätspunkteprogramm in der Loyalitätspunkteprogrammdatenbank 16 zu registrieren und zu aktivieren.

Das vorgefertigte und konfigurierbare Softwaremodul 11 umfasst sämtliche Programmfunktionen und Datenstrukturen für eine Loyalitätszentrale, welche auf einem herkömmlichen Kommunikationsserver installiert werden kann. Vorteilhafterweise kann das Softwaremodul 11 für eine Loyalitätszentrale von interessierten Loyalitätspunkteprogrammanbietern so konfiguriert werden, dass die Loyalitätszentrale als separater Prozess auf einem Kommunikationsserver der Loyalitätsplattform 1 installiert wird oder dass sie bloss als Applikationseinheit 26, 26' einer Loyalitätszentrale 2 der Loyalitätsplattform 1 integriert wird. Im ersten Fall profitiert der betreffende Loyalitätspunkteprogrammanbieter von der Leistungsfähigkeit eines dedizierten Kommunikationsservers, während der letztere Fall vor allem Kostenvorteile bietet, da der betreffende Loyalitätspunkteprogrammanbieter zwar seine eigene Konfiguration der Loyalitätszentrale hat, diese aber gemeinsam mit anderen Konfigurationen von anderen Loyalitätspunkteprogrammanbieter in einer Loyalitätszentrale 2 der Loyalitätsplattform 1 laufen lässt. Insbesondere für den letzteren Fall kann es vorteilhaft sein, wenn bei der Registrierung des Loyalitätspunkteprogramms diesem Loyalitätspunkteprogramm eine Loyalitätspunkteprogrammidentifizierung zugewiesen wird. Eine solche Loyalitätspunkteprogrammidentifizierung kann dann auch den Kunden, respektive den teilnehmenden Dienstanbietern des betreffenden registrierten Loyalitätspunkteprogramms zugewiesen werden, so dass die Loyalitätszentrale 2 der Loyalitätsplattform 1 bei der Bearbeitung von Anfragen oder Aufträgen eines Kunden oder Dienstanbieters betreffend dieses Loyalitätspunkteprogramm auf die entsprechende Applikationseinheit 26, 26', respektive das entsprechende Loyalitätspunkteprogrammprofil zugreifen kann. Die Zuweisung von Loyalitätspunkteprogrammidentifizierungen erfolgt beispielsweise mittels einer Verknüpfung von Kundeninformationen, respektive Dienstanbieterinformationen, in einer Datenbank und/oder kann einem Kunden auf ein Identifizierungsmodul geladen werden und bei Anfragen oder Aufträgen dieses Kunden jeweils an die Loyalitätszentrale 2 übermittelt werden.

Die Benutzerschnittstelle 17 ist ein programmiertes Softwaremodul, welches interessierten Kunden, respektive Dienstanbietern, den Zugang zur Loyalitätsplattform 1, wie oben beschrieben, mittels einem Kommunikationsendgerät 31 über ein Telekommunikationsnetz 3, ermöglicht. Die Benutzerschnittstelle 17 bietet interessierten Kunden, respektive Dienstanbietern, beispielsweise eine grafische Benutzeroberfläche um sich, unter anderem, beispielsweise über verfügbare Loyalitätspunkteprogramme zu informieren und sich für solche gezielt zu registrieren. Wenn sich ein Kunde, respektive ein Dienstanbieter, beispielsweise für ein bestimmtes Loyalitätspunkteprogramm registrieren möchte wird dies beispielsweise durch ein Registrationsmodul 23 der Loyalitätszentrale 2 des betreffenden Loyalitätspunkteprogramms durchgeführt, wobei der Kunde, respektive der Dienstanbieter, über die Benutzerschnittstelle 17 mit dem Registrationsmodul 23 verbunden wird oder direkt auf das Registrationsmodul 23 zugreifen kann. Bei der Registration werden Dienstanbieterinformationen, respektive Kundeninformationen, wie beispielsweise Name, Adresse, Alter, Zivilstand, Anzahl/Alter von Kindern, Raucher oder Nichtraucher, und die Rufnummer eines Kommunikationsendgeräts, welches ein Identifizierungsmodul des betreffenden Kunden enthält, erfasst und in einer Kundendatenbank, respektive in einer Dienstanbieterdatenbank, abgespeichert. Die Kundendatenbank 22, respektive die Dienstanbieterdatenbank 21, und das Registrationsmodul 23 können, beispielsweise konfigurierbar, Teile der Loyalitätszentrale 2 oder für verschiedene Loyalitätszentralen zugängliche Teile der Loyalitätsplattform 1 sein. Die Kundeninformationen umfassen zudem eine Kundenidentifizierung, welche beispielsweise durch das Registrationsmodul 23 bestimmt wird oder welche von einem Identifizierungsmodul des betreffenden Kunden gelesen und übernommen wird. Das Registrationsmodul 23 bestimmt zudem auch Dienstanbieteridentifizierungen für Dienstanbieter, die sich für Loyalitätspunkteprogramme registrieren. Eine Kundenidentifizierung, respektive eine Dienstanbieteridentifizierung, kann für sämtliche Loyalitätspunkteprogramme identisch sein oder für bestimmte Loyalitätspunkteprogramme, insbesondere solche die eine Loyalitätszentrale auf einem eigenen Kommunikationsserver konfiguriert haben, separat bestimmt werden.

Das vorgefertigte und konfigurierbare Softwaremodul 12 umfasst sämtliche Programmfunktionen und Datenstrukturen für ein Loyalitätskundenprogramm, welches einem Kunden die Kommunikation und Kooperation mit der Loyalitätszentrale eines registrierten Loyalitätspunkteprogramms und gegebenenfalls auch mit einem POS 7 (Point of Service) eines teilnehmendem Dienstanbieters ermöglicht. Das Loyalitätskundenprogramm 12 wird, wie oben beschrieben, in Übereinstimmung mit der Konfiguration des Softwaremoduls 11 für eine Loyalitätszentrale des betreffenden Loyalitätspunkteprogramms konfiguriert und den Kunden, die sich für dieses Loyalitätspunkteprogramm registriert haben, zur Ausführung durch einen Prozessor auf einen Datenträger 6 geladen. Die konfigurationsspezifischen Parameter eines Loyalitätspunkteprogramms betreffen beispielsweise Angaben betreffend den Zugang zur zugehörigen Loyalitätszentrale, die Aktivierung, respektive Deaktivierung von verfügbaren Programmfunktionen, eine oder mehrere Loyalitätspunkteprogrammidentifizierungen, sowie Datenstrukturen und Programmfunktionen für ein Loyalitätspunktekonto. Der Datenträger ist vorzugsweise ein Identifizierungsmodul 6 des betreffenden Kunden, welches neben dem erforderlichen Speicher 61 auch einen mit diesem Speicher 61 verbundenen Prozessor 62 umfasst. Ein solches Identifizierungsmodul 6, das als Chipkarte ausgeführt ist, ist beispielsweise eine SIM-Karte (Subscriber Identity Module), die vor allem in der Mobiltelefonie mit Mobilfunktelefonen 71 aber immer häufiger auch in festinstallierten Kommunikationsendgeräten 8 eingesetzt wird.

Das Laden eines konfigurierten Loyalitätskundenprogramms 12 auf ein Identifizierungsmodul 6 wird durch ein Lademodul 24 durchgeführt, welches beispielsweise konfigurierbar ein Teil der Loyalitätszentrale 2 oder ein für verschiedene Loyalitätszentralen zugänglicher Teil der Loyalitätsplattform 1 sein kann. Das Laden durch das Lademodul 24 erfolgt beispielsweise über ein Festnetz 5, beispielsweise das öffentliche geschaltete Telefonnetz, ein LAN oder WAN, oder das Internet, an welches ein festinstalliertes Kommunikationsendgerät 8 angeschlossen ist, das ein Identifizierungsmodul 6 aufnehmen kann. Das Kommunikationsendgerät 8 ist beispielsweise ein öffentlich zugängliches Terminal, das von interessierten Benutzern auch für den Zugang zu den Benutzerschnittstellen 14, 15, 17 verwendet werden kann. Das Laden durch das Lademodul 24 kann aber auch über ein Mobilnetz 4 erfolgen, beispielsweise ein GSM- oder UMTS-Netz, beispielsweise mittels speziellen Kurzmeldungen, wie SMS- (Short Message Services) oder USSD-Meldungen (Unstructured Supplementary Services Data). Für den Datenaustausch mittels Kurzmeldungen verfügt die Loyalitätsplattform 1 beispielsweise über eine Kurzmeldungsdienstzentrale 25 (Short Message Service Center, SMSC) oder über ein entsprechendes programmiertes Softwaremodul 25, welches über eine Kommunikationsverbindung Zugang zu einer solchen Kurzmeldungsdienstzentrale hat. Die Kurzmeldungsdienstzentrale 25, respektive das entsprechende Kommunikationsmodul 25, können beispielsweise ebenfalls als Teil einer Loyalitätszentrale 2 konfiguriert werden.

Ein wesentlicher Vorteil, das konfigurierte Loyalitätskundenprogramm 12 auf ein Identifizierungsmodul 6 zu laden besteht darin, dass die Identität des betreffenden Kunden durch dieses Identifizierungsmodul 6 ausgewiesen werden kann. Der Fachmann wird verstehen, dass weitere Sicherheitsdienste, wie zum Beispiel die Verwendung von persönlichen ldentifizierungsnummern, die beispielsweise verschlüsselt auf dem Identifizierungsmodul gespeichert sind, verwendet werden können. Neben dem Loyalitätskundenprogramm 12 können durch das Lademodul auch weitere Informationen, wie beispielsweise eine weitere Kundenidentifizierung, die zum Beispiel spezifisch für ein bestimmtes Loyalitätspunkteprogramm ausgegeben wird, auf dem Identifizierungsmodul gespeichert werden.

Wie oben erwähnt wurde gehören auch Datenstrukturen und Programmfunktionen für ein Loyalitätspunktekonto zu den konfigurationsspezifischen Parametern eines Loyalitätspunkteprogramms 12. Als Alternative oder zusätzlich können die notwendigen Datenstrukturen und Programmfunktionen für ein Loyalitätspunktekonto eines Kunden auch als Teile der Loyalitätszentrale 2 oder für mehrere Loyalitätszentralen zugänglich auf der Loyalitätsplattform 1 konfiguriert werden. Ebenso können Datenstrukturen und Programmfunktionen für ein Loyalitätspunktekonto eines Dienstanbieters, als Teil der Loyalitätszentrale 2 oder für mehrere Loyalitätszentralen zugänglich auf der Loyalitätsplattform 1 konfiguriert werden.

Das vorgefertigte und konfigurierbare Softwaremodul 13 umfasst sämtliche Programmfunktionen und Datenstrukturen für einen Dienstanbieter-POS 7 (Point of Service), welches für verschiedenste Hardwareplattformen konfiguriert werden kann und im Wesentlichen Programmfunktionen zur Kommunikation und Kooperation zwischen einem Loyalitätskundenprogramm 12 auf einem Identifizierungsmodul 6 und dem POS 7, sowie zwischen dem POS 7 und einer Loyalitätszentrale 2 umfasst.

Ein Kunde der sich bei einem Loyalitätspunkteprogramm registriert hat und sich bei einem POS eines Dienstanbieters, der ebenfalls für dieses Loyalitätspunkteprogramm registriert ist, mit seiner zugewiesenen Kundenidentifizierung identifiziert, vorzugsweise mit dem oben beschriebenen Identifizierungsmodul 6, in welchem die Kundenidentifizierung elektronisch gespeichert ist, aber möglicherweise auch mit einer Kundenkarte mit aufgedruckter Kundenidentifizierung, beispielsweise als alphanumerischer Text oder als Barcode, oder mit der Kundenidentifizierung, die in einem Magnetstreifen enthalten ist, hat ein Anrecht auf die Gutschrift von Loyalitätspunkten in einem vordefinierten Gegenwert zu den gekauften Produkten oder Dienstleistungen. Loyalitätspunkte können einem Kunden auch aus anderen Gründen gutgeschrieben werden, beispielsweise weil sich ein Kunde durch Kundenanwerbung verdient gemacht hat, weil das betreffende Loyalitätspunkteprogramm Punktezinsen gutschreibt, oder beim Zutritt zu POS mit Zutrittskontrolle. Loyalitätspunkte können vom betreffenden Loyalitätspunkteprogramm auch an verschiedene Kunden oder zu verschiedenen Zeiten ungleich gutgeschrieben werden, beispielsweise können spezielle Goldpunkte mit erhöhtem Wert für besonders loyale Kunden gutgeschrieben werden oder es können zeitlich limitierte Punkteaktionen durchgeführt werden. Zudem können Loyalitätspunkte auch ein Verfalldatum aufweisen. Diese verschiedenen Loyalitätspunkteregeln sind weitere Beispiele für konfigurierbare Regeln einer Loyalitätszentrale 2. An dieser Stelle sollte zudem erwähnt werden, dass mindestens gewisse der konfigurierbaren Regeln vom zuständigen Loyalitätspunkteprogrammanbieter auch zu Zeitpunkten nach der ursprünglichen Konfiguration und Registrierung des betreffenden Loyalitätspunkteprogramms eingefügt, verändert und/oder gelöscht werden können. Je nach Ausführungsvariante und Konfiguration des betreffenden Loyalitätspunkteprogramms ergeben sich verschiedene Transaktionsabläufe, um die verdienten Loyalitätspunkte einem Loyalitätspunktekonto des betreffenden Kunden gutzuschreiben.

Wenn ein Loyalitätspunktekonto nur in der Loyalitätszentrale 2 des betreffenden Loyalitätspunkteprogramms eingerichtet ist, überträgt das Softwaremodul 13, welches im Dienstanbieter-POS installiert ist, die Kundenidentifizierung, welche manuell in ein POS-Terminal 7 eingegeben oder ab dem Identifizierungsmodul 6 erfasst wurde, die Dienstanbieteridentifizierung, welche beispielsweise bei der Registrierung des Dienstanbieters in seine Kopie des Softwaremoduls 13 eingefügt wurde, sowie Angaben zur Ermittlung der Anzahl gutzuschreibender Loyalitätspunkte an die Loyalitätszentrale 2, deren Adresse beispielsweise im Loyalitätspunkteprogrammprofil enthalten ist und in das konfigurierte Softwaremodul 13 eingefügt wurde. Auf Grund der erhaltenen Informationen schreibt die Loyalitätszentrale 2 die Loyalitätspunkte auf dem Loyalitätspunktekonto des betreffenden Kunden gut, beispielsweise unter Berücksichtigung von vordefinierten Regeln zur Bestimmung der Anzahl gutzuschreibender Loyalitätspunkte.

Wenn ein Loyalitätspunktekonto nur im Identifizierungsmodul 6 des Kunden eingerichtet ist, überträgt das Softwaremodul 13, welches im Dienstanbieter-POS installiert ist, mindestens die Angaben zur Ermittlung der Anzahl gutzuschreibender Loyalitätspunkte an das Loyalitätskundenprogramm im Identifizierungsmodul 6, beispielsweise über eine kontaktlose Schnittstelle 76, 77. Das Identifizierungsmodul 6 verfügt beispielsweise über eine integrierte elektromagnetische Schnittstelle, die zum Beispiel auch induktiv durch das POS-Terminal 7 gespiesen wird, so dass die Übertragung, wie mit dem Doppelpfeil 76 angedeutet, direkt zwischen dem POS-Terminal 7 und dem Identifizierungsmodul 6 erfolgen kann. Das Identifizierungsmodul 6 kann aber auch in ein Mobilgerät 71 eingeführt sein und mit diesem über eine kontaktbehaftete Schnittstelle entfernbar verbunden sein, welches Mobilgerät 71 eine kontaktlose Schnittstelle umfasst, beispielsweise eine Infrarotschnittstelle, zum Beispiel eine High Speed Infrared (HSIR)-Schnittstelle oder eine IrDA-Schnittstelle (Infrared Data Association), eine induktive Schnittstelle, zum Beispiel eine Radio Frequency Identification (RFID)-Schnittstelle, eine Home RF (Radio Frequency)-Schnittstelle, eine Digital European Cordless Telecommunications (DECT)-Schnittstelle oder eine andere Cordless Telecommunications System (CTS)-Schnittstelle, oder eine hochfrequente Funkschnittstelle, zum Beispiel eine sogenannte "Bluetooth-Schnittstelle", so dass die Übertragung, wie mit dem Doppelpfeil 77 angedeutet, zwischen dem POS-Terminal 7 und dem Identifizierungsmodul 6 via das Mobilgerät 71 erfolgen kann. Entsprechend den erhaltenen Angaben bestimmt das Loyalitätskundenprogramm die Anzahl gutzuschreibender Loyalitätspunkte und schreibt sie auf dem lokalen Loyalitätspunktekonto gut. Die Anzahl gutzuschreibender Loyalitätspunkte kann auch im POS-Terminal 7 bestimmt oder durch dieses von der betreffenden Loyalitätszentrale 2 angefragt werden und an das Identifizierungsmodul 6 übertragen und dort dem Loyalitätspunktekonto gutgeschrieben werden.

Wenn ein Loyalitätspunktekonto im Identifizierungsmodul 6 des Kunden und in der Loyalitätszentrale 2 des betreffenden Loyalitätspunkteprogramms eingerichtet ist, erfolgt die Übertragung beispielsweise wie oben beschrieben zunächst auf die Loyalitätszentrale 2 und dann von der Loyalitätszentrale 2 über ein Mobilnetz 4, beispielsweise mittels SMS- oder USSD-Meldungen, auf das Loyalitätskundenprogramm auf dem Identifizierungsmodul 6 im Mobilgerät 71. Die Übertragung kann ebenso in der umgekehrten Reihenfolge ausgeführt werden oder kann vom POS-Terminal an das Loyalitätskundenprogramm und an die Loyalitätszentrale 2 übertragen werden.

Über die oben erwähnte Benutzerschnittstelle 17 kann ein registrierter Benutzer, beispielsweise durch Eingabe eines Passwortes, Zugang zu persönlichen Daten erhalten und beispielsweise den Kontostand seines Loyalitätspunktekonto abfragen. Ähnliche Programmfunktionen können auch durch das Loyalitätskundenprogramm verfügbar sein, wobei je nach Ausführungsvariante und Konfiguration das lokale Loyalitätspunktekonto auf dem Identifizierungsmodul abgefragt wird oder über das Mobilnetz 4 oder via dem Terminal 8 über das Festnetz 5 das Loyalitätspunktekonto in der betreffenden Loyalitätszentrale 2 angefragt wird.

Das Loyalitätskundenprogramm auf dem Identifizierungsmodul 6 verfügt aber auch über Programmfunktionen um Loyalitätspunkte einzulösen, das heisst um Produkte und Dienstleistungen von teilnehmenden Dienstanbietern - wenigstens teilweise - zu bezahlen oder um Bargeld im Gegenwert zu beziehen, wobei mindestens die Anzahl zu transferierender Loyalitätspunkte, die Kundenidentifizierung des betreffenden Kunden sowie die Dienstanbieteridentifizierung des zu bezahlenden Dienstanbieters an die Loyalitätszentrale 2 des betreffenden Loyalitätspunkteprogramms übermittelt werden und dort Loyalitätspunkte auf ein Loyalitätspunktekonto des betreffenden Dienstanbieters transferiert werden. In entsprechender Weise können auch Loyalitätspunkte auf ein anderes Loyalitätspunktekonto, beispielsweise das eines anderen Kunden, transferiert werden. Dies kann wiederum durch Einfügen des Identifizierungsmoduls 6 in das Terminal 8 über das Festnetz 5 oder mittels dem Mobilgerät 71 über das Mobilnetz 4 erfolgen. In einer weiteren Variante erfolgt der Transfer von Loyalitätspunkten direkt vom Loyalitätskundenprogramm auf einem ersten Identifizierungsmodul 6 auf das Loyalitätskundenprogramm auf einem zweiten Identifizierungsmodul, wobei das erste oder beide Identifizierungsmodule zu diesem Zweck in ein Mobilgerät 71 eingeführt werden und die Übertragung über eine integrierte kontaktlose Schnittstelle oder über das Mobilnetz 4 erfolgt.

Der Kunde kann Programmfunktionen des Loyalitätskundenprogramms mittels Bedienungselementen des Mobilgeräts 71 oder des Terminals 8 wählen und aktivieren. Die Identifizierungsmodule 6 sind beispielsweise sogenannte Java-Karten (Java ist ein geschütztes Warenzeichen von SUN Microsystems) wobei das Loyalitätskundenprogramm entsprechend als Java-Applet ausgeführt werden kann. Der Fachmann wird verstehen, dass auch andere Programmiersprachen und/oder Kartenoperationssysteme verwendet werden können. Insbesondere können im Mobilgerät auch Funktionen der sogenannten Wireless Application Platform (WAP) verwendet werden.

Die oben erwähnte Dienstanbieterdatenbank, oder eine separate aber für die Loyalitätszentrale 2, respektive für die Loyalitätsplattform 1 zugängliche Datenbank kann auch Informationen über Produkte und Dienstleistungen enthalten, insbesondere die Anzahl gutzuschreibender Loyalitätspunkte bei deren Erwerb durch eine Bezahlung mit Geld, respektive deren Preis im Gegenwert von Loyalitätspunkten, auf welche vom Kunden, ähnlich wie oben beschrieben, mittels Programmfunktionen des Loyalitätskundenprogramms über die Loyalitätszentrale 2, respektive über die Loyalitätsplattform 1 zugegriffen werden kann. Der Kunde kann mittels Programmfunktionen des Loyalitätskundenprogramms die Dienstanbieterdatenbank, und gegebenenfalls eine separate Produkte-/Dienstleistungsdatenbank, sowie mindestens gewisse Einträge der Kundendatenbank durchblättern und Einträge selektieren, wobei mindestens die dem selektierten Eintrag zugehörige Dienstanbieteridentifizierung, Kundenidentifizierung, respektive Produkte-/Dienstleistungsidentifizierung zur weiteren Verarbeitung von der Loyalitätszentrale 2 an das Loyalitätskundenprogramm übermittelt wird.

Bei der Abfrage der Datenbanken können durch das Loyalitätskundenprogramm auch Angaben über die aktuelle geografische Position des Kunden, respektive des von diesem Kunden benutzten Kommunikationsendgeräts 71, 8, an die Loyalitätszentrale 2 übermittelt werden, so dass die Loyalitätszentrale 2 die resultierenden Eintragsdaten von den angefragten Datenbanken spezifisch auf solche Einträge einschränkt, die für das durch die geografische Position bestimmte geografische Gebiet relevant sind.

Loyalitätskundenprogramme, respektive die betreffenden konfigurierten Loyalitätskundenprogramme und Loyalitätszentralen oder die Loyalitätsplattform 1, können auch weitere Programmfunktionen umfassen, beispielsweise können der Zugriff auf spezielle Angebote in einem Punktemarkt, allgemeine Verwaltungsfunktionen, wie beispielsweise Abrufen des Loyalitätspunktekontostands, oder der Zugriff auf Loyalitätspunktebörsen mit anderen Kunden, oder Loyalitätspunktespiele ermöglicht werden.

Die Loyalitätsplattform 1 und die verschiedenen Loyalitätspunkteprogramme ermöglichen, dass Informationen über Loyalitätspunktetransaktionen gesammelt und statistisch ausgewertet werden können, wobei auch spezielle Angebote und Informationen auf Grund dieser Auswertungen bestimmten Kunden im Push-Modus verfügbar gemacht werden können.

Der Fachmann wird verstehen, dass insbesondere bei der Übertragung von Daten und Softwaremodulen zwischen den beteiligten Transaktionseinheiten (Loyalitätskundenprogramm, Loyalitätszentrale, POS-Terminal) auch Sicherheitsdienste, wie beispielsweise Verschlüsselung, Authentifizierung der Kommunikationspartner, beispielsweise unter Zuhilfenahme von TTP-Diensten (Trusted Third Party), benützt werden können.

Der Betreiber einer Loyalitätsplattform 1 kann einem Loyalitätspunkteprogrammanbieter beispielsweise für jedes registrierte Loyalitätsprogramm und für jeden dafür registrierten Kunden eine monatliche Gebühr verrechnen. Loyalitätsplattformen, respektive Datenträger mit der dafür nötigen Software zur Installierung auf einem Kommunikationsserver, können auch an interessierte Betreiber von Loyalitätsplattformen 1 verkauft oder gegen eine periodische Lizenzgebühr zur Verfügung gestellt werden.

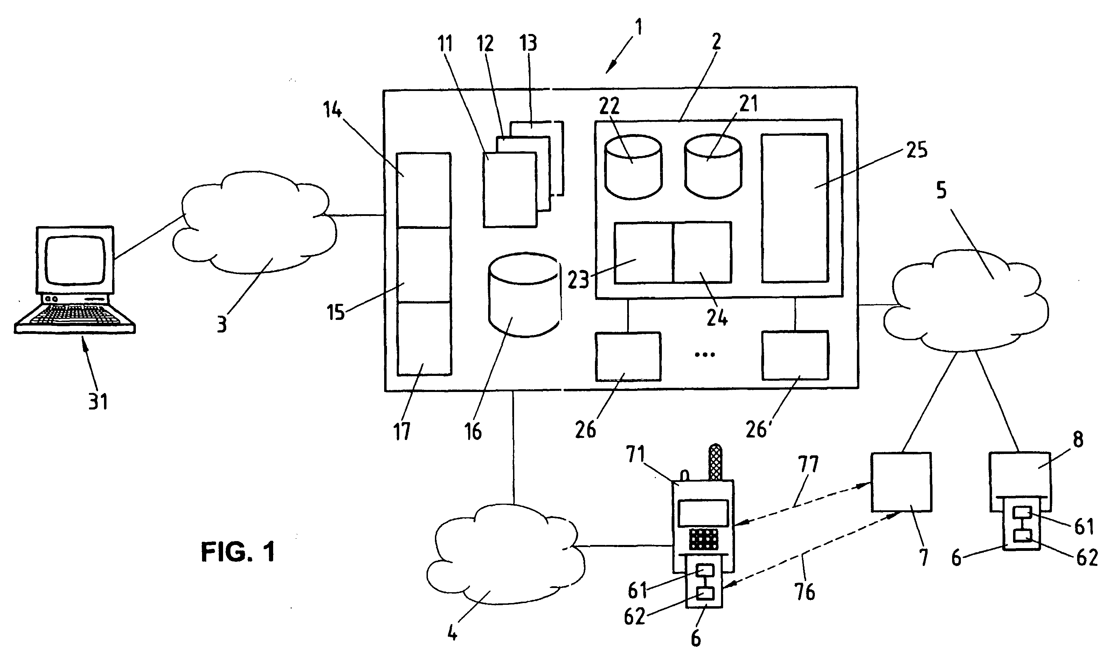

## Patentansprüche

1. Verfahren zum Zuweisen und Einlösen von Loyalitätspunkten und zum Erstellen von dafür geeigneten Loyalitätspunkteprogrammen, wobei Loyalitätspunkte Kunden gutgeschrieben werden, die an einem genannten Loyalitätspunkteprogramm teilnehmen, wenn sie Produkte und Dienstleistungen von Dienstanbietern beziehen, die an diesem Loyalitätspunkteprogramm teilnehmen, und wobei Loyalitätspunkte von teilnehmenden Kunden als Zahlungsmittel beim Bezug von mindestens gewissen Produkten und Dienstleistungen von teilnehmenden Dienstanbietern eingesetzt werden können, und wobei Kunden, respektive Dienstanbieter, registriert werden, indem Kundeninformationen, respektive Dienstanbieterinformationen, erfasst und in einer Kundendatenbank (22), respektive in einer Dienstanbieterdatenbank (21), abgespeichert werden, und wobei für jeden registrierten Kunden und für jeden registrierten Dienstanbieter mindestens ein Loyalitätspunktekonto erstellt wird und wobei die Kundeninformationen, respektive die Dienstanbieterinformationen, mindestens eine Kundenidentifizierung respektive eine Dienstanbieteridentifizierung umfassen, **dadurch gekennzeichnet,**
**dass** zur Erstellung eines Loyalitätspunkteprogramms jeweils vorgefertigte, in einer computerbasierten Loyalitätsplattform (1) gespeicherte Softwaremodule für eine Loyalitätszentrale (11) und für Loyalitätskundenprogramme (12) konfiguriert werden, und
**dass** das konfigurierte Softwaremodul für eine Loyalitätszentrale (11) jeweils in der Loyalitätsplattform (1) installiert wird, und
**dass** die neu erstellten Loyalitätspunkteprogramme mittels einer bereitstehenden Benutzeroberfläche (15) bei der Loyalitätsplattform (1) registriert werden, und
**dass** die Kundendatenbank (22) und die Dienstanbieterdatenbank (21) auf der Loyalitätsplatform (1) abgespeichert werden, und
**dass** die konfigurierten Softwaremodule für Loyalitätskundenprogramme (12) durch die Loyalitätsplattform (1) über ein Telekommunikationsnetz (4) auf einen Datenträger (6) eines registrierten Kunden übertragen werden, und
**dass** Loyalitätspunkte einem Loyalitätspunktekonto eines registrierten Kunden gutgeschrieben werden, der sich beim Bezug von Produkten und/oder Dienstleistungen von einem mit dem betreffenden Loyalitätspunkteprogramm registrierten Dienstanbieter mit seiner Kundenidentifizierung identifiziert, und
**dass** der Transfer von Loyalitätspunkten vom Loyalitätspunktekonto eines registrierten Kunden als Zahlungsmittel auf ein Loyalitätspunktekonto eines mit dem betreffenden Loyalitätspunkteprogramm registrierten Dienstanbieters durch eine vom registrierten Kunden gewählte Programmfunktion des Loyalitätskundenprogramms ausgelöst wird, wobei mindestens die Anzahl der zu transferierenden Loyalitätspunkte, die Kundenidentifizierung des registrierten Kunden sowie die Dienstanbieteridentifizierung des zu bezahlenden Dienstanbieters an die Loyalitätszentrale des betreffenden Loyalitätspunkteprogramms übermittelt werden.

2. Verfahren gemäss Anspruch 1, **dadurch gekennzeichnet, dass** die genannte Kundenidentifizierung im Speicher (61) eines auf diesen Kunden ausgestellten Identifizierungsmoduls (6) abgespeichert wird, welches Identifizierungsmodul (6) mindestens einen mit dem genannten Speicher (61) verbundenen Prozessor (62) umfasst, und dass für diesen registrierten Kunden ein genanntes Loyalitätskundenprogramm (12) für das betreffende Loyalitätspunkteprogramm im genannten Speicher (61) des Identifizierungsmoduls (6) abgespeichert wird.

3. Verfahren gemäss Anspruch 2, **dadurch gekennzeichnet, dass** mindestens gewisse genannte Loyalitätspunktekonti von Kunden auf deren Identifizierungsmodulen (6) eingerichtet werden, wobei der Zugang zu, respektive die Verwaltung von solchen Loyalitätspunktekonti durch entsprechende Programmfunktionen des zugehörigen genannten Loyalitätskundenprogramms (12) kontrolliert, respektive gehandhabt wird.

4. Verfahren gemäss einem der Ansprüche 1 bis 3, **dadurch gekennzeichnet, dass** mindestens gewisse genannte Loyalitätspunktekonti von Kunden in einer genannten Loyalitätszentrale (2) eingerichtet werden, wobei der Zugang zu, respektive die Verwaltung von solchen Loyalitätspunktekonti durch entsprechende Programmfunktionen dieser Loyalitätszentrale (2) kontrolliert, respektive gehandhabt wird.

5. Verfahren gemäss einem der Ansprüche 1 bis 4, **dadurch gekennzeichnet, dass** der Transfer von Loyalitätspunkten vom Loyalitätspunktekonto des betreffenden Kunden auf ein Loyalitätspunktekonto eines anderen registrierten Kunden durch eine vom betreffenden Kunden gewählte Programmfunktion des Loyalitätskundenprogramms ausgelöst wird, wobei mindestens die Anzahl zu transferierender Loyalitätspunkte, die Kundenidentifizierung des betreffenden Kunden sowie die Kundenidentifizierung des anderen Kunden an die Loyalitätszentrale (2) und/oder an das Loyalitätskundenprogramm des anderen Kunden übermittelt werden.

6. Verfahren gemäss einem der Ansprüche 1 bis 5, **dadurch gekennzeichnet, dass** genannte Loyalitätspunkte dem Loyalitätspunktekonto eines registrierten Kunden durch einen Dienstanbieter-POS (7) gutgeschrieben werden, indem vom Dienstanbieter-POS (7) mindestens eine Kundenidentifizierung, eine Dienstanbieteridentifizierung sowie Angaben zur Ermittlung der Anzahl gutzuschreibender Loyalitätspunkte an die Loyalitätszentrale (2) und/oder an das Loyalitätskundenprogramm dieses registrierten Kunden übertragen werden.

7. Verfahren gemäss einem der Ansprüche 2 bis 6, **dadurch gekennzeichnet, dass** Datenübertragungen zwischen einem Loyalitätskundenprogramm auf einem Identifizierungsmodul (6) und einer Loyalitätszentrale (2) mittels einem Kommunikationsendgerät (8, 71 ), mit welchem das Identifizierungsmodul (6) verbunden ist, über ein Telekommunikationsnetz (4, 5) erfolgen.

8. Verfahren gemäss einem der Ansprüche 1 bis 7, **dadurch gekennzeichnet, dass** Datenübertragungen zwischen einem Dienstanbieter-POS (7) und einem Loyalitätskundenprogramm über eine kontaktlose Schnittstelle (76, 77) erfolgen.

9. Verfahren gemäss einem der Ansprüche 2 bis 8, **dadurch gekennzeichnet, dass** Datenübertragungen zwischen einem Loyalitätskundenprogramm auf dem Identifizierungsmodul (6) eines ersten Kunden und einem Loyalitätskundenprogramm auf dem Identifizierungsmodul (6) eines zweiten Kunden über eine kontaktlose Schnittstelle oder mittels Kommunikationsendgeräten (71), mit welchem die Identifizierungsmodule (6) verbunden sind, über ein Telekommunikationsnetz (4) erfolgt.

10. Verfahren gemäss einem der Ansprüche 8 oder 9, **dadurch gekennzeichnet, dass** mindestens gewisse der genannten kontaktlosen Schnittstellen in genannten Identifizierungsmodulen (6) integriert sind.

11. Verfahren gemäss einem der Ansprüche 8 oder 9, **dadurch gekennzeichnet, dass** mindestens gewisse der genannten kontaktlosen Schnittstellen in Kommunikationsendgeräten (71) integriert sind, mit welchen genannte Identifizierungsmodule (6) verbunden sind.

12. Verfahren gemäss einem der Ansprüche 2 bis 11, **dadurch gekennzeichnet, dass** ein registrierter Kunde mittels Programmfunktionen des Loyalitätskundenprogramms Einträge in der Kundendatenbank (22), respektive in der Dienstanbieterdatenbank (21) durchblättern und selektieren kann, wobei entsprechende Abfragedaten und resultierende Eintragsdaten zwischen dem mit einem Kommunikationsendgerät (8, 71) verbundenen Identifizierungsmodul (6) und den genannten Datenbanken über ein Telekommunikationsnetz (4, 5) ausgetauscht werden.

13. Verfahren gemäss Anspruch 12, **dadurch gekennzeichnet, dass** bei der Selektion eines Dienstanbietereintrags, respektive eines Kundeneintrags, mindestens die dem selektierten Eintrag zugehörige Dienstanbieteridentifizierung, respektive Kundenidentifizierung, von der Loyalitätszentrale (2) an das Loyalitätskundenprogramm übermittelt wird.

14. Verfahren gemäss einem der Ansprüche 12 oder 13, **dadurch gekennzeichnet, dass** die Dienstanbieterdatenbank (21) auch Produkteinträge und Dienstleistungseinträge umfasst, und dass bei der Selektion eines Produkteintrags, respektive eines Dienstleistungseintrags, mindestens eine dem selektierten Eintrag zugehörige Produktidentifizierung, respektive Dienstleistungsidentifizierung, sowie entsprechende, in Loyalitätspunkten angegebene Kostenangaben von der genannten Loyalitätszentrale (2) an das Loyalitätskundenprogramm übermittelt werden.

15. Verfahren gemäss einem der Ansprüche 7 bis 14, **dadurch gekennzeichnet, dass** genannte Kommunikationsendgeräte Mobilgeräte (71) sind und dass das genannte Telekommunikationsnetz ein Mobilnetz (4) ist.

16. Verfahren gemäss einem der Ansprüche 7 bis 15, **dadurch gekennzeichnet, dass** eine genannte Loyalitätszentrale (2) eine Kurzmeldungsdienstzentrale (25) umfasst, und dass der Datenaustausch zwischen einer genannten Loyalitätszentrale (2) und einem Loyalitätskundenprogramm mittels speziellen Kurzmeldungen erfolgt.

17. Verfahren gemäss einem der Ansprüche 12 bis 16, **dadurch gekennzeichnet, dass** genannte Abfragedaten Angaben über die aktuelle geografische Position des genannten Kommunikationsendgeräts (8, 71) umfassen, und dass genannte resultierende Eintragsdaten spezifisch auf solche Einträge eingeschränkt werden, die für das durch die genannte geografische Position bestimmte geografische Gebiet relevant sind.

18. Verfahren gemäss einem der Ansprüche 1 bis 17, **dadurch gekennzeichnet, dass** bei der Konfigurierung von genannten vorgefertigten Softwaremodulen (11, 12) definiert werden kann, mit welchen anderen registrierten Partnerloyalitätspunkteprogrammen Loyalitätspunkte ausgetauscht werden können.

19. Verfahren gemäss einem der Ansprüche 1 bis 18, **dadurch gekennzeichnet, dass** bei der Konfigurierung von genannten vorgefertigten Softwaremodulen (11, 12) definiert werden kann wo, respektive wie, auf die zugehörige Loyalitätszentrale (2) zugegriffen werden kann.

20. Verfahren gemäss einem der Ansprüche 1 bis 19, **dadurch gekennzeichnet, dass** bei der Konfigurierung von genannten vorgefertigten Softwaremodulen (11, 12) mindestens gewisse Programmfunktionen dieser Softwaremodule (11, 12) deaktiviert werden können.

21. Verfahren gemäss einem der Ansprüche 1 bis 20, **dadurch gekennzeichnet, dass** bei der Registrierung eines Loyalitätspunkteprogramms diesem Loyalitätspunkteprogramm eine Loyalitätspunkteprogrammidentifizierung zugewiesen wird, und dass bei der Registrierung eines Kunden, respektive eines Dienstanbieters, mit diesem Loyalitätspunkteprogramm diese Loyalitätspunkteprogrammidentifizierung in der Kundendatenbank (22), respektive in der Dienstanbieterdatenbank (21), mit den entsprechenden Kundeninformationen, respektive Dienstanbieterinformationen, verknüpft wird.

22. Computerbasierte Loyalitätsplattform (1) für Loyalitätspunkteprogramme, welche einen Kommunikationsserver mit Verbindungen zu mindestens einem Telekommunikationsnetz (3, 4, 5) umfasst, wobei in genannten Loyalitätspunkteprogrammen Loyalitätspunkte Kunden gutgeschrieben werden, die an einem genannten Loyalitätspunkteprogramm teilnehmen, wenn sie Produkte und Dienstleistungen von Dienstanbietem beziehen, die an diesem Loyalitätspunkteprogramm teilnehmen, und wobei Loyalitätspunkte von teilnehmenden Kunden als Zahlungsmittel beim Bezug von mindestens gewissen Produkten und Dienstleistungen von teilnehmenden Dienstanbietern eingesetzt werden können, und wobei Kundeninformationen respektive Dienstanbieterinformationen erfasst und in einer Kundendatenbank (22) respektive in einer Dienstanbieterdatenbank (21) abgespeichert werden, und wobei die Kundeninformationen respektive die Dienstanbieterinformationen mindestens eine Kundenidentifizierung respektive eine Dienstanbieteridentifizierung umfassen, **dadurch gekennzeichnet,**
**dass** die Loyalitätsplattform (1) zur Erstellung eines Loyalitätspunkteprogramms vorgefertigte, gespeicherte, konfigurierbare Softwaremodule für eine Loyalitätszentrale (11) und für Loyalitätskundenprogramme (12) umfasst, und
**dass** die Loyalitätsplattform (1) eine Loyalitätspunkteprogrammdatenbank (16) mit gespeicherten, der Konfiguration der Softwaremodule entsprechenden Loyalitätspunkteprogrammprofilen umfasst, und
**dass** die Loyalitätsplattform (1) eingerichtet ist konfigurierte Softwraremodule für eine Loyalitätszentrale (11) in der Loyalitätsplattform (1) zu installieren, und
**dass** die Loyalitätsplattform (1) eine Benutzeroberfläche (15) umfasst zum Registrieren neuer Loyalitätspunkteprogramme, und
**dass** die Loyalitätsplattform (1) die Kundendatenbank (22), die Dienstanbieterdatenbank (21) sowie ein Registrationsmodul (23) umfasst zum Registrieren von Kunden, respektive von Dienstanbietern, beim betreffenden registrierten Loyalitätspunkteprogramm, und wobei durch das Registrationsmodul (23) für jeden registrierten Kunden und für jeden registrierten Dienstanbieter mindestens ein Loyalitätspunktekonto erstellt wird, und
**dass** die Loyalitätsplattform (1) ein Lademodul (24) umfasst zum Übertragen der konfigurierten Softwaremodule für Loyalitätskundenprogramme (12) über ein Telekommunikationsnetz (4) auf Datenträger (6) der registrierten Kunden.

23. Loyalitätsplattform (1) gemäss Anspruch 22, **dadurch gekennzeichnet, dass** eine genannte Loyalitätszentrale (2) ein Lademodul (24) umfasst, welches für registrierte Kunden ein für das betreffende Loyalitätspunkteprogramm konfiguriertes genanntes Softwaremodul für ein Loyalitätskundenprogramm (12) im Speicher (61) eines auf diesen registrierten Kunden ausgestellten Identifizierungsmoduls (6) abspeichert, welches Identifizierungsmodul (6) mindestens einen mit dem genannten Speicher (61) verbundenen Prozessor (62) umfasst.

24. Loyalitätsplattform (1) gemäss einem der Ansprüche 22 oder 23, **dadurch gekennzeichnet, dass** ein genanntes Softwaremodul für ein Loyalitätskundenprogramm (12) eine Programmfunktion umfasst, die den Transfer von Loyalitätspunkten, vom Loyalitätspunktekonto des betreffenden Kunden als Zahlungsmittel auf ein Loyalitätspunktekonto eines mit dem betreffenden Loyalitätspunkteprogramm registrierten Dienstanbieters auslöst, wobei mindestens die Anzahl zu transferierender Loyalitätspunkte, die Kundenidentifizierung des betreffenden Kunden sowie die Dienstanbieteridentifizierung des zu bezahlenden Dienstanbieters an eine genannte Loyalitätszentrale (2) des betreffenden Loyalitätspunkteprogramms übermittelt werden.

25. Loyalitätsplattform (1) gemäss einem der Ansprüche 23 bis 24, **dadurch gekennzeichnet, dass** mindestens gewisse genannte Loyalitätspunktekonti eines Kunden auf seinem Identifizierungsmodul (6) eingerichtet sind, und dass der Zugang zu, respektive die Verwaltung von solchen Loyalitätspunktekonti durch entsprechende Programmfunktionen des genannten Softwaremoduls für ein Loyalitätskundenprogramm (12) kontrolliert, respektive gehandhabt wird.

26. Loyalitätsplattform (1) gemäss einem der Ansprüche 22 bis 25, **dadurch gekennzeichnet, dass** mindestens gewisse genannte Loyalitätspunktekonti von Kunden in der zugehörigen genannten Loyalitätszentrale (2) eingerichtet sind, und dass der Zugang zu, respektive die Verwaltung von solchen Loyalitätspunktekonti durch entsprechende Programmfunktionen dieser Loyalitätszentrale (2) kontrolliert, respektive gehandhabt wird.

27. Loyalitätsplattform (1) gemäss einem der Ansprüche 22 bis 26, **dadurch gekennzeichnet, dass** das genannte Softwaremodul für ein Loyalitätskundenprogramm (12) eine von einem Kunden wählbare Programmfunktion umfasst, welche den Transfer von Loyalitätspunkten vom Loyalitätspunktekonto des betreffenden Kunden auf ein Loyalitätspunktekonto eines anderen registrierten Kunden auslöst, wobei mindestens die Anzahl zu transferierenden Loyalitätspunkte, die Kundenidentifizierung des betreffenden Kunden sowie die Kundenidentifizierung des anderen Kunden an eine zugehörige genannte Loyalitätszentrale (2) und/oder an das Softwaremodul für ein Loyalitätskundenprogramm des anderen Kunden übermittelt werden.

28. Loyalitätsplattform (1) gemäss einem der Ansprüche 22 bis 27, **dadurch gekennzeichnet, dass** sie zusätzlich ein vorgefertigtes Softwaremodul für einen Dienstanbieter-POS umfasst (13), welches von Dienstanbietem bezogen und konfiguriert werden kann, wobei ein genanntes Softwaremodul für einen Dienstanbieter-POS (13) genannte Loyalitätspunkte dem Loyalitätspunktekonto eines registrierten Kunden gutschreibt, indem mindestens eine Kundenidentifizierung, eine Dienstanbieteridentifizierung sowie Angaben zur Ermittlung der Anzahl gutzuschreibender Loyalitätspunkte an eine zugehörige genannte Loyalitätszentrale (2) und/oder an das Softwaremodul für ein Loyalitätskundenprogramm dieses registrierten Kunden übertragen werden.

29. Loyalitätsplattform (1) gemäss einem der Ansprüche 22 bis 28, **dadurch gekennzeichnet, dass** eine genannte Loyalitätszentrale (2) eine Kurzmeldungsdienstzentrale (25) umfasst, und dass der Datenaustausch zwischen einer genannten Loyalitätszentrale (2) und einem Softwaremodul für ein Loyalitätskundenprogramm mittels speziellen über ein Mobilnetz (4) ausgetauschten Kurzmeldungen erfolgt.

30. Loyalitätsplattform (1) gemäss einem der Ansprüche 22 bis 29, **dadurch gekennzeichnet, dass** bei der Konfigurierung von genannten vorgefertigten Softwaremodulen (11, 12, 13) definiert werden kann, mit welchen anderen registrierten Partnerloyalitätspunkteprogrammen Loyalitätspunkte ausgetauscht werden können.

31. Loyalitätsplattform (1) gemäss einem der Ansprüche 22 bis 30, **dadurch gekennzeichnet, dass** bei der Konfigurierung von genannten vorgefertigten Softwaremodulen (11, 12, 13) definiert werden kann wo, respektive wie, auf die zugehörige Loyalitätszentrale (2) zugegriffen werden kann.

32. Loyalitätsplattform (1) gemäss einem der Ansprüche 22 bis 31, **dadurch gekennzeichnet, dass** bei der Konfigurierung von genannten vorgefertigten Softwaremodulen (11, 12, 13) mindestens gewisse Programmfunktionen dieser Softwaremodule (11, 12, 13) deaktiviert werden können.

33. Loyalitätsplattform (1) gemäss einem der Ansprüche 22 bis 32, **dadurch gekennzeichnet, dass** bei der Registrierung eines Loyalitätspunkteprogramms diesem Loyalitätspunkteprogramm eine Loyalitätspunkteprogrammidentifizierung zugewiesen wird, und dass bei der Registrierung eines Kunden, respektive eines Dienstanbieters, mit diesem Loyalitätspunkteprogramm diese Loyalitätspunkteprogrammidentifizierung in der Kundendatenbank (22), respektive in der Dienstanbieterdatenbank (21), mit den entsprechenden Kundeninformationen, respektive Dienstanbieterinformationen, verknüpft wird.

## Claims

1. Method for assigning and redeeming loyalty points and for creating loyalty points programs suitable therefor, loyalty points being credited to customers who take part in a said loyalty points program when they purchase products and services from service providers who take part in this loyalty points program, and loyalty points of participating customers being able to be used as means of payment when purchasing at least certain products and services of participating service providers, and customers, respectively service providers, being registered in that customer data, respectively service provider data, are captured and are stored in a customer database (22), respectively in a service provider database (21), and for each registered customer and for each registered service provider at least one loyalty points account being created, and the customer data, respectively the service provider data, comprise at least a customer identification, respectively a service provider identification, **characterised**
**in that** for creating a loyalty points program in each case prefabricated software modules, stored in a computer-based loyalty platform (1), are configured for a loyalty central unit (11) and for loyalty customer programs (12), and
**in that** the configured software module for a loyalty central unit (11) is installed in each case in the loyalty platform (1), and
**in that** the newly created loyalty points programs are registered with the loyalty platform (1) by means of an available user interface (15), and
**in that** the customer database (22) and the service provider database (21) are stored on the loyalty platform (1), and
**in that** the configured software modules for loyalty customer programs (12) are transmitted by the loyalty platform (1) over a telecommunication network (4) onto a data carrier (6) of a registered customer, and
**in that** loyalty points are credited to a loyalty points account of a registered customer, who identifies himself with his customer identification when purchasing products and/or services from a service provider registered with the respective loyalty points program, and
**in that** the transfer of loyalty points from the loyalty points account of a registered customer, as means of payment, to a loyalty points account of a service provider registered with the respective loyalty points program is triggered through a program function, selected by the registered customer, of the loyalty customer program, at least the number of the loyalty points to be transferred, the customer identification for the registered customer as well as the service provider identification for the service provider to be paid being transmitted to the loyalty central unit of the respective loyalty points program.

2. Method according to claim 1, **characterised in that** said customer identification is stored in the memory (61) of an identification module (6) issued for this customer, which identification module (6) comprises at least one processor (62) connected to said memory (61), and **in that** a said loyalty customer program (12) for the respective loyalty points program is stored for this registered customer in said memory (61) of the identification module (6).

3. Method according to claim 2, **characterised in that** at least certain said loyalty points accounts are created by customers on their identification modules (6), the access to, respectively the administration of, such loyalty points accounts being controlled, respectively handled, through corresponding program functions of the associated said loyalty customer program (12).

4. Method according to one of the claims 1 to 3, **characterised in that** at least certain said loyalty points accounts are created by customers in a said loyalty central unit (2), the access to, respectively the administration of, such loyalty points accounts being controlled, respectively handled, through corresponding program functions of this loyalty central unit (2).

5. Method according to one of the claims 1 to 4, **characterised in that** the transfer of loyalty points from the loyalty points account of the respective customer to a loyalty points account of another registered customer is triggered by a program function, selected by the respective customer, of the loyalty customer program, at least the number of loyalty points to be transferred, the customer identification for the respective customer as well as the customer identification for the other customer being transmitted to the loyalty central unit (2) and/or to the loyalty customer program of the other customer.

6. Method according to one of the claims 1 to 5, **characterised in that** said loyalty points are credited to the loyalty points account of a registered customer by a service provider POS (7) **in that** at least a customer identification, a service provider identification as well as indications for determining the number of loyalty points to be credited are transmitted by the service provider POS (7) to the loyalty central unit (2) and/or to the loyalty customer program of this registered customer.

7. Method according to one of the claims 2 to 6, **characterised in that** data transmissions between a loyalty customer program on an identification module (6) and a loyalty central unit (2) take place over a telecommunication network (4, 5) by means of a communication terminal (8, 71), to which the identification module (6) is connected.

8. Method according to one of the claims 1 to 7, **characterised in that** data transmissions between a service provider POS (7) and a loyalty customer program take place via a contactless interface (76, 77).

9. Method according to one of the claims 2 to 8, **characterised in that** data transmissions between a loyalty customer program on an identification module (6) of a first customer and a loyalty customer program on an identification module (6) of a second customer takes <sic. take> place over a telecommunication network (4) via a contactless interface or by means of communication terminals (71), to which the identification modules (6) are connected.

10. Method according to one of the claims 8 or 9, **characterised in that** at least certain of said contactless interfaces are integrated into said identification modules (6).

11. Method according to one of the claims 8 or 9, **characterised in that** at least certain of said contactless interfaces are integrated into communication terminals (71) to which said identification modules (6) are connected.

12. Method according to one of the claims 2 to 11, **characterised in that** a registered customer is able to browse and select entries in the customer database (22), respectively in the service provider database (21), by means of program functions of the loyalty customer program, corresponding query data and resulting entry data being exchanged between the identification module, connected to a communication terminal (8, 71), and said data bases over a telecommunication network (4, 5).

13. Method according to claim 12, **characterised in that** during the selection of a service provider entry, respectively of a customer entry, at least the service provider identification, respectively customer identification, belonging to the selected entry is transmitted from the loyalty central unit (2) to the loyalty customer program.

14. Method according to one of the claims 12 or 13, **characterised in that** the service provider database (21) also comprises product entries and service entries, and **in that** during the selection of a product entry, respectively of a service entry, at least one product identification, respectively service identification, belonging to the selected entry, as well as corresponding cost data, indicated in loyalty points, are transmitted from said loyalty central unit (2) to the loyalty customer program.

15. Method according to one of the claims 7 to 14, **characterised in that** said communication terminals are mobile devices (71), and **in that** said telecommunication network is a mobile network (4).

16. Method according to one of the claims 7 to 15, **characterised in that** a said loyalty central unit (2) comprises a short message service centre (25), and **in that** the exchange of data between a said loyalty central unit (2) and a loyalty customer program takes place by means of special short messages.

17. Method according to one of the claims 12 to 16, **characterised in that** said query data comprise data about the current geographic position of said communication terminal (8, 71), and **in that** said resulting entry data are specifically limited to such entries which are relevant for the geographic area defined by said geographic position.

18. Method according to one of the claims 1 to 17, **characterised in that** during the configuration of said prefabricated software modules (11, 12) it is possible to define with which other registered partner loyalty points programs loyalty points are able to be exchanged.

19. Method according to one of the claims 1 to 18, **characterised in that** during the configuration of said prefabricated software modules (11, 12) it is possible to define where, respectively how, the associated loyalty central unit (2) is able to be accessed.

20. Method according to one of the claims 1 to 19, **characterised in that** during the configuration of said prefabricated software modules (11, 12) at least certain program functions of these software modules (11, 12) are able to be deactivated.

21. Method according to one of the claims 1 to 20, **characterised in that** during the registration of a loyalty points program, a loyalty points program identification is assigned to this loyalty points program, and **in that** during the registration of a customer, respectively a service provider, with this loyalty points program, this loyalty points program identification is linked in the customer database (22), respectively in the service provider database (21), to the corresponding customer data, respectively service provider data.

22. Computer-based loyalty platform (1) for loyalty points programs comprising a communication server with connections to at least one telecommunication network (3, 4, 5), in said loyalty points programs loyalty points being credited to customers, who participate in a said loyalty points program, when they purchase products and services from service providers who participate in this loyalty points program, and loyalty points of participating customers being able to be used as means of payment during purchase of at least certain products and services from participating service providers, and customer data, respectively service provider data, being captured and being stored in a customer database (22), respectively in a service provider database (21), and the customer data, respectively the service provider data, comprising at least a customer identification, respectively a service provider identification, **characterised**
**in that**, for creating a loyalty points program, the loyalty platform (1) comprises prefabricated, stored, configurable software modules for a loyalty central unit (11) and for loyalty customer programs (12), and
**in that** the loyalty platform (1) comprises a loyalty points program database (16) with stored loyalty points program profiles corresponding to the configuration of the software modules, and
**in that** the loyalty platform (1) is set up to install in the loyalty platform (1) configured software modules for a loyalty central unit (11), and
**in that** the loyalty platform (1) comprises a user interface (15) for registering new loyalty points programs, and
**in that** the loyalty platform (1) comprises the customer database (22), the service provider database (21) as well as a registration module (23) for registering customers, respectively service providers, with the respective registered loyalty points program, and at least one loyalty points account being created by the registration module (23) for each registered customer and for each registered service provider, and
**in that** the loyalty platform (1) comprises a loading module (24) for transmission of the configured software modules for loyalty customer programs (12) over a telecommunication network (4) onto data carriers (6) of the registered customers.

23. Loyalty platform (1) according to claim 22, **characterised in that** a said loyalty central unit (2) comprises a loading module (24), which stores, for registered customers, a said software module, configured for the respective loyalty points program, for a loyalty customer program (12), in the memory (61) of an identification module (6) issued for this registered customer, which identification module (6) comprises at least one processor (62) connected to said memory (61).

24. Loyalty platform (1) according to one of the claims 22 or 23, **characterised in that** a said software module for a loyalty customer program (12) comprises a program function which triggers the transfer of loyalty points from the loyalty points account of the respective customer, as means of payment, to a loyalty points account of a service provider registered with the respective loyalty points program, at least the number of loyalty points to be transferred, the customer identification for the registered customer as well as the service provider identification for the service provider to be paid being transmitted to a said loyalty central unit (2) of the respective loyalty points program.

25. Loyalty platform (1) according to one of the claims 23 to 24, **characterised in that** at least certain said loyalty points accounts of a customer are created on his identification module (6), and **in that** the access to, respectively the administration of, such loyalty points accounts is controlled, respectively handled, through corresponding program functions of said software module for a loyalty customer program (12).

26. Loyalty platform (1) according to one of the claims 22 to 25, **characterised in that** at least certain said loyalty points accounts of customers are created in the said associated loyalty central unit (2), and **in that** the access to, respectively the administration of, such loyalty points accounts is controlled, respectively handled, through corresponding program functions of this loyalty central unit (2).

27. Loyalty platform (1) according to one of the claims 22 to 26, **characterised in that** said software module for a loyalty customer program (12) comprises a program function selectable by a customer, which function triggers the transfer of loyalty points from the loyalty points account of the respective customer to a loyalty points account of another registered customer, at least the number of the loyalty points to be transferred, the customer identification for the registered customer as well as the customer identification for the other customer being transmitted to a said associated loyalty central unit (2) and/or to the software module for a loyalty customer program of the other customer.

28. Loyalty platform (1) according to one of the claims 22 to 27, **characterised in that** it further comprises a prefabricated software module for a service provider POS (13), which is able to be obtained and configured by service providers, a said software module for a service provider POS (13) crediting said loyalty points to the loyalty points account of a registered customer **in that** at least a customer identification, a service provider identification as well as indications for determining the number of loyalty points to be credited are transmitted to a said associated loyalty central unit (2) and/or to the software module for a loyalty customer program of this registered customer.

29. Loyalty platform (1) according to one of the claims 22 to 28, **characterised in that** a said loyalty central unit (2) comprises a short message service centre (25), and **in that** the exchange of data between a said loyalty central unit (2) and a software module for a loyalty customer program takes place by means of special short messages exchanged over a mobile network (4).

30. Loyalty platform (1) according to one of the claims 22 to 29, **characterised in that** during the configuration of said prefabricated software modules (11, 12, 13) it is possible to define with which other registered partner loyalty points programs loyalty points are able to be exchanged.

31. Loyalty platform (1) according to one of the claims 22 to 30, **characterised in that** during the configuration of said prefabricated software modules (11, 12, 13) it is possible to define where, respectively how, the associated loyalty central unit (2) is able to be accessed.

32. Loyalty platform (1) according to one of the claims 22 to 31, **characterised in that** during the configuration of said prefabricated software modules (11, 12, 13) at least certain program functions of these software modules (11, 12, 13) are able to be deactivated.

33. Loyalty platform (1) according to one of the claims 22 to 32, **characterised in that** during the registration of a loyalty points program, a loyalty points program identification is assigned to this loyalty points program, and **in that** during the registration of a customer, respectively a service provider, with this loyalty points program, this loyalty points program identification is linked in the customer database (22), respectively in the service provider database (21), to the corresponding customer data, respectively service provider data.

## Revendications

1. Procédé pour attribuer et toucher des points de fidélité et pour réaliser des programmes de point de fidélité prévus à cet effet, des points de fidélité étant crédités aux clients qui ont participé à un dit programme de points de fidélité quand ils reçoivent des produits ou des services de prestataires de services, qui participent à un programme de points de fidélité et les points de fidélité de clients participants pouvant être utilisés comme moyen de paiement lors de l'acquisition d'au moins certains produits et services de prestataires de services participants et de clients, des prestataires de services respectifs étant enregistrés dans le fait que des informations relatives aux clients, des informations relatives aux prestataires de services sont saisies et stockées dans une banque de données de client (22) respectivement dans une banque de données de prestataires (21) et pour chaque client enregistré et chaque prestataire enregistré, il est ouvert au moins un compte de points de fidélité et les informations de clients, respectivement les informations de prestataires de services comprenant au moins une identification client respectivement une identification prestataire, **caractérisé en ce que**
pour la réalisation d'un programme de points de fidélité, des modules de logiciel préfabriqués stockés dans une plate-forme de fidélité (1) sont configurés pour une centrale de fidélité (11) et pour des programmes de fidélité client (12), et
**en ce que** le module de logiciel configuré est installé pour une centrale de fidélité (11) respectivement dans la plate-forme de fidélité (1) et
**en ce que** les nouveaux programmes de points de fidélité sont enregistrés au moyen de la surface utilisateur déjà existante (15) dans la plate-forme de fidélité (1) et
**en ce que** la banque de données client (22) et la banque de données de prestataires (21) sont stockées sur la plate-forme de fidélité (1), et
**en ce que** les modules de logiciel configurés pour les programmes de fidélité client (12) sont transmis par la plate-forme de fidélité (1) par le biais d'un réseau de télécommunication (4) sur un support de données (6) d'un client enregistré et
**en ce que** des points de fidélité sont crédités sur un compte de points de fidélité d'un client enregistré qui s'identifie par son identification client lors de l'acquisition de produits et/ou services d'un prestataire de services enregistré avec le programme de points de fidélité concerné, et
**en ce que** le transfert de points de fidélité d'un compte de points de fidélité d'un client enregistré en tant que moyen de paiement à un compte de points de fidélité d'un prestataire de services enregistré par le programme de points de fidélité respectif est déclenché par une fonction de programme sélectionnée par le client enregistré du programme de fidélité client, au moins le nombre des points de fidélité à transférer, l'identification du prestataire de services à régler sont transmis à la centrale de fidélité du programme de points de fidélité considéré.

2. Procédé selon la revendication 1, **caractérisé en ce que** ladite identification de client est stockée dans la mémoire (61) d'un module d'identification (6) établi sur ce client, lequel module d'identification (6) comprend au moins un processeur (62) relié à la dite mémoire (61) et **en ce que** pour ce client enregistré, un programme de fidélité client (12) pour ledit programme de points de fidélité est stocké dans la mémoire (61) du module d'identification (6).

3. Procédé selon la revendication 1, **caractérisé en ce qu'**au moins certains dits comptes de points de fidélité de client sont adaptés à leurs modules d'identification (6), l'accès à respectivement la gestion de tels comptes de points de fidélité est contrôlé respectivement maîtrisé par des fonctions de programme dudit programme de fidélité client respectif (12).

4. Procédé selon l'une des revendications 1 à 3, **caractérisé en ce que** qu'au moins certains dits comptes de points de fidélité de clients sont créés dans une dite centrale de fidélité (2), l'accès à respectivement la gestion de tels comptes de points de fidélité est contrôlé respectivement maîtrisé par des fonctions correspondantes de programme de cette centrale de fidélité (2).

5. Procédé selon l'une des revendications 1 à 4, **caractérisé en ce que** le transfert de points de fidélité du compte de points de fidélité du client considéré à un compte de points de fidélité d'un autre client enregistré est déclenché par une fonction de programme choisie par le client considéré du programme de fidélité client, au moins le nombre des points de fidélité à transférer, l'identification du client concerné ainsi que l'identification de l'autre client étant transmis à la centrale de fidélité (2) et/ou au programme de fidélité client de l'autre client.

6. Procédé selon l'une des revendications 1 à 5, **caractérisé en ce que** lesdits points de fidélités sont crédités sur le compte de points de fidélité d'un client enregistré par un POS (7) (Point of Sale = Point de vente) du prestataire de services, dans le fait qu'au moins une identification client, une identification de prestataire de services ainsi que des indications sur la détermination du nombre des points de fidélité à créditer étant transmis par le POS (7) (Point of Sale = Point de vente) du prestataire de services à la centrale de fidélité (2) et/ou au programme de fidélité client de ce client enregistré.

7. Procédé selon l'une des revendications 2 à 6, **caractérisé en ce que** des transmissions de données entre un programme de fidélité client sur un module d'identification (6) et une centrale de fidélité (2) s'effectuent au moyen d'un terminal de communication (8, 71) qui est relié au module d'identification (6), par l'intermédiaire d'un réseau de télécommunication (4, 5).

8. Procédé selon l'une des revendications 1 à 7, **caractérisé en ce que** des transmissions de données entre un POS (7) (Point of Sale = Point de vente) du prestataire de services et un programme de fidélité client s'effectuent par une interface sans contact (76, 77).

9. Procédé selon l'une des revendications 2 à 8, **caractérisé en ce que** des transmissions de données entre un programme de fidélité client sur le module d'identification (6) d'un premier client et un programme de fidélité client sur le module d'identification (6) d'un second client s'effectue par une interface sans contact ou au moyen de terminaux de communication (71) auxquels sont reliés les modules d'identification (6), par l'intermédiaire d'un réseau de télécommunication (4).

10. Procédé selon l'une des revendications 8 ou 9, **caractérisé en ce qu'**au moins certaines desdites interfaces sans contact sont intégrées dans lesdits modules d'identification (6).

11. Procédé selon l'une des revendications 8 ou 9, **caractérisé en ce qu'**au moins certaines desdites interfaces sans contact sont intégrées dans des terminaux de communication (71) auxquels sont reliés lesdits modules d'identification (6).

12. Procédé selon l'une des revendications 2 à 11, **caractérisé en ce qu'**un client enregistré peut consulter et sélectionner au moyen de fonctions du programme de fidélité client des entrées dans la banque de données client (22) dans la banque de données de prestataires de services (21), des données de requête correspondantes et des données d'entrées résultantes étant échangées entre le module d'identification (6) relié à un terminal de communication (8, 71) et lesdites banques de données par l'intermédiaire d'un réseau de télécommunication (4, 5).

13. Procédé selon la revendication 12, **caractérisé en ce que** lors de la sélection d'une entrée de prestataire de services, respectivement d'une entrée de client, au moins l'identification de prestataire associée à l'entrée sélectionnée, respectivement l'identification de client est transmis par la centrale de fidélité (2) au programme de fidélité client.

14. Procédé selon l'une des revendications 12 ou 13, **caractérisé en ce que** la banque de données de prestataires de services (21) comprend également des entrées de produits et des entrées de service et **en ce que** lors de la sélection d'une entrée de produit respectivement d'une entrée de service au moins une identification associée à l'entrée sélectionnée, respectivement une identification de prestation de services ainsi que des indications de comptes correspondantes indiquées dans des points de fidélité sont transmises par ladite centrale de fidélité (2) au programme de fidélité client.

15. Procédé selon l'une des revendications 7 à 14, **caractérisé en ce que** lesdits terminaux de communication sont des périphériques mobiles (71) et **en ce que** ledit réseau de télécommunication est un réseau mobile (4).

16. Procédé selon l'une des revendications 7 à 15, **caractérisé en ce qu'**une dite centrale de fidélité (2) comprend une centre de service de messages courts (25) et **en ce que** l'échange de données entre une dite centrale de fidélité (2) et un programme de fidélité client s'effectue au moyen de messages courts spéciaux.

17. Procédé selon l'une des revendications 12 à 16, **caractérisé en ce que** lesdites données de requête comprennent des indications sur la position géographique actuelle dudit terminal de communication (8, 71), et **en ce que** lesdites données d'entrée résultantes sont limitées aux entrées qui sont pertinentes pour la région géographique définie par ladite position géographique.

18. Procédé selon l'une des revendications 1 à 17, **caractérisé en ce que** lors de la configuration de dits modules de logiciels préfabriqués (11, 12), il peut être défini avec quels autres programmes enregistrés partenaires de points fidélité, des points de fidélité peuvent être échangés.

19. Procédé selon l'une des revendications 1 à 18, **caractérisé en ce que** lors de la configuration de dits modules de logiciels préfabriqués (11, 12), il peut être défini où respectivement comment il est possible d'avoir accès à la centrale de fidélité (2) respective.

20. Procédé selon l'une des revendications 1 à 19, **caractérisé en ce que** lors de la configuration de dits modules de logiciels préfabriqués (11, 12), au moins certaines fonctions de programme de ces modules de logiciel (11, 12) peuvent être désactivées.

21. Procédé selon l'une des revendications 1 à 20, **caractérisé en ce que** lors de l'enregistrement d'un programme de point de fidélité, ce programme de points de fidélité est associé à une identification de programme de points de fidélité et **en ce que** lors de l'enregistrement d'un client, respectivement d'un prestataire de services, cette identification de programme de points de fidélité est associée avec ce programme de points de fidélité dans la banque de données clients (22), respectivement dans la banque de données de prestataires de services (21), aux informations de client correspondantes respectivement aux informations de prestataires de services respectives.

22. Plate-forme de fidélité assistée par ordinateur (1) pour des programmes de points de fidélité, qui comprend un serveur de communication avec des connexions à au moins un réseau de télécommunication (3, 4, 5), dans lesdits programmes de points de fidélité, des points de fidélité étant crédités à des clients qui participent à un dit programme de points de fidélité, s'ils perçoivent des produits et services de prestataires qui participent à ce programme de points de fidélité et des points de fidélité pouvant être utilisés par les clients participants comme moyen de paiement pour la perception de certains produis et services de prestataires participants et des informations clients respectivement des informations de prestataires de services étant saisie et stockées dans une banque de données client (22) respectivement dans une banque de données de prestataires de services (21) et les informations clients respectivement les informations de prestataires de services comprenant au moins une identification client respectivement une identification de prestataire de services, **caractérisée en ce que**
la plate-forme de fidélité (1) comprend des modules de logiciel stockés, configurables préfabriqués pour la réalisation d'un programme de points de fidélité destiné à une centrale de fidélité (11) et pour des programmes de fidélité client (12), et
**en ce que** la plate-forme de fidélité (1) comprend une banque de données de programme de points de fidélité (16) avec des profilés de programme de points de fidélité stockés et correspondants à la configuration des modules de logiciel et
**en ce que** la plate-forme de fidélité (1) est réalisée pour installer des modules de logiciel configurés pour une centrale de fidélité (11) dans la plate-forme de fidélité (1), et
**en ce que** la plate-forme de fidélité (1) comprend une surface utilisateur (15) pour l'enregistrement de nouveaux programmes de points de fidélité et
**en ce que** la plate-forme de fidélité (1) comprend la banque de données de client (22), la banque de données de prestataires de services (21) ainsi qu'un module d'enregistrement pour l'enregistrement de clients respectivement de prestataires de services auprès du programme de points de fidélité enregistré concerné, et par le module d'enregistrement (23) pour chaque client enregistré et pour chaque prestataire de services, un compte de points de fidélité est ouvert, et
**en ce que** la plate-forme de fidélité (1) comprend un module de chargement (24) pour la transmission des modules de logiciel configurés pour les programmes de fidélité client (12) par l'intermédiaire d'un réseau de télécommunication (4) sur des supports de données (6) des clients enregistrés.

23. Plate-forme de fidélité (1) selon la revendication 22, **caractérisée en ce qu'**une dite centrale de fidélité (2) comprend un module de chargement (24) lequel stocke pour des clients enregistrés un dit module de logiciel configuré pour le programme de points de fidélité considéré pour un programme de fidélité client (12) dans la mémoire (61) d'un module d'identification (6) établi sur ce client enregistré, lequel module d'identification (6) comprend au moins un processeur (62) relié à ladite mémoire (61).

24. Plate-forme de fidélité (1) selon l'une des revendications 22 ou 23, **caractérisée en ce qu'**un dit module de logiciel pour un programme de fidélité client (12) comprend une fonction de programme qui déclenche le transfert de points de fidélité du compte de points de fidélité du client considéré en tant que moyen de paiement à un compte de points de fidélité d'un prestataire de services inscrit au programme de points de fidélité, au moins le nombre des points de fidélité à transférer, l'identification du client concerné ainsi que l'identification du prestataire de services à régler étant transmis à une dite centrale de fidélité (2) du programme de points de fidélité considéré.

25. Plate-forme de fidélité (1) selon l'une des revendications 23 à 24, **caractérisée en ce qu'**au moins certains dits comptes de points de fidélité d'un client sont agencés sur son module d'identification (6), et **en ce que** l'accès à respectivement la gestion de tels comptes de points de fidélité est contrôlé respectivement géré par des fonctions de programme dudit module de logiciel pour un programme de fidélité client (12).

26. Plate-forme de fidélité (1) selon l'une des revendications 22 à 24, **caractérisée en ce qu'**au moins certains dits comptes de points de fidélité de client sont établis dans ladite centrale de fidélité respective et **en ce que** l'accès à respectivement la gestion de tels comptes de points de fidélité est contrôlé respectivement géré par des fonctions de programme correspondantes de cette centrale de fidélité (2).

27. Plate-forme de fidélité (1) selon l'une des revendications 22 à 26, **caractérisée en ce que** ledit module de logiciel comprend pour un module de fidélité client (12) une fonction de programme sélectionnable par le client qui déclenche le transfert de points de fidélité du compte de points de fidélité du client considéré à un compte de points de fidélité d'un autre client enregistré, au moins le nombre des points de fidélité à transférer, l'identification client du client considéré ainsi que l'identification de l'autre client étant transmis à une dite centrale de fidélité (2)respective et/ou au module de logiciel pour un programme de fidélité de l'autre client.

28. Plate-forme de fidélité (1) selon l'une des revendications 22 à 27, **caractérisé en ce qu'**elle comprend en supplément un module de logiciel préfabriqué pour un POS (13) (Point of Sale = Point de vente) de prestataire de services qui peut être perçu et configuré par des prestataires de services, un dit module de logiciel pour un POS (13) (Point of Sale = Point de vente) de prestataire de services créditant desdits points de fidélité sur le compte de points de fidélité d'un client enregistré, dans le fait qu'au moins une identification de client, une identification de prestataires de services ainsi que des informations sur la détermination du nombre des points de fidélité à créditer sont transmises à une dite centrale de fidélité respective (2) et/ou au module de logiciel pour un programme de fidélité client de ce client enregistré.

29. Plate-forme de fidélité (1) selon l'une des revendications 22 à 28, **caractérisée en ce qu'**une dite centrale de fidélité (2) comprend une centrale de services de message court (25) et **en ce que** l'échange de données entre une dite centrale de fidélité (2) et un module de logiciel pour un programme de fidélité client s'effectue au moyen de messages clients spéciaux échangés par un réseau mobile (4).

30. Plate-forme de fidélité (1) selon l'une des revendications 22 à 29, **caractérisée en ce que** lors de la configuration de dits modules de logiciel préfabriqués (11, 12, 13), il peut être défini où respectivement comment il peut être accédé à des centrales de fidélité respectives (2).

31. Plate-forme de fidélité (1) selon l'une des revendications 22 à 30, **caractérisée en ce que** lors de la configuration de dits modules de logiciel préfabriqués (11, 12, 13), il peut être défini où respectivement comment il peut être accédé à des centrales de fidélité respectives (2).

32. Plate-forme de fidélité (1) selon l'une des revendications 22 à 30, **caractérisée en ce que** lors de la configuration de dits modules de logiciel préfabriqués (11, 12, 13), au moins certaines fonctions de programme de ces modules de logiciel (11, 12, 13) peuvent être désactivées.

33. Plate-forme de fidélité (1) selon l'une des revendications 22 à 32, **caractérisée en ce qu'**au lors de l'enregistrement d'un programme de points de fidélité ce programme de points de fidélité est attribué à une identification de programme de points et **en ce que** lors de l'enregistrement d'un client respectivement d'un prestataire de services, cette identification de programme de points de fidélité dans la banque de données (22) respectivement dans la banque de données de prestataires de services (21) étant associée aux informations de client correspondantes respectivement aux informations de prestataires de services.
